# DEMANDE DE BREVET EUROPEEN

(11) **EP 1 139 680 A1**
(43) Date de publication de la demande: **04.10.2001**
(21) Numéro de dépôt: 01201029.4
(22) Date de dépôt: 20.03.2001
(51) Int. Cl.: H04Q 7/32

(54) **Appareil comprenant un dispositif de stockage pour des informations de fonctionnement et procédé pour mettre à jour ce dispositif de stockage**

(30) Priorité: 28.03.2000 FR 0003904
(71) Demandeur: Koninklijke Philips Electronics N.V., 5621 BA Eindhoven (NL)
(72) Inventeur: Simon, Jean-Michel, Société Civile S.P.I.D., 75008 Paris (FR)
(74) Mandataire: Chaffraix, Jean

(57) **Abrégé**

Le fonctionnement de l'appareil (1) dépend des informations contenues dans un dispositif de stockage (85). Il s'avère souvent nécessaire de mettre à jour ces informations. Pour cela on prélève des informations contenues dans un autre dispositif de stockage contenu dans un autre appareil (50), de préférence de même type.

Application aux appareils portables de téléphonie cellulaire.

## Description

L'invention concerne un appareil d'un certain type comprenant un dispositif de stockage pour des informations de fonctionnement.

L'invention trouve d'importantes applications notamment dans le domaine des appareils téléphoniques mobiles faisant partie d'un réseau cellulaire. Dans ce genre d'appareil, de nombreuses fonctions sont définies par des informations contenues dans un dispositif de mémoire. Souvent, il devient nécessaire de changer ces fonctions, d'en ajouter, voire d'en supprimer.

L'invention concerne aussi un procédé pour mettre à jour ledit dispositif de stockage.

L'invention concerne encore un système comprenant au moins deux appareils de même type du genre précité

Un tel appareil est connu du document de brevet PCT WO 97/35453. Pour mettre à jour ou pour modifier le logiciel de fonctionnement de l'appareil, il est proposé dans ce document de brevet de faire appel à un ordinateur de type PC, par exemple.

L'appareil connu, de ce document, présente l'inconvénient que la mise en oeuvre d'un tel ordinateur peut présenter des difficultés et demande une certaine infra structure. Il faut prévoir, par exemple, un serveur à partir duquel on obtient les informations de mise à jour. En outre, il faut savoir comment déclencher ce programme de mise à jour.

La présente invention propose un appareil du genre mentionné dans le préambule, qui évite la nécessité d'utiliser un ordinateur.

Pour cela, un tel appareil est remarquable en ce qu'il comporte des moyens de mise à jour pour mettre à jour son dispositif de stockage à partir d'un autre appareil de même type.

Un procédé du genre précité est remarquable en ce que lesdites informations de mise à jour sont prélevées à partir d'un autre appareil de même type.

Ce procédé comporte les étapes suivantes :
- préparation d'un premier appareil pour fournir les informations de mise à jour,
- préparation d'un deuxième appareil pour recevoir la mise à jour,
- transfert des informations du premier appareil vers le deuxième,
- inscription des données de mise à jour dans le dispositif de stockage du deuxième appareil.

Un système du genre précité est remarquable en ce qu'au moins un premier appareil comporte des moyens pour communiquer ses informations de mise à jour et en ce qu'au moins un deuxième appareil comporte des moyens pour être mis à jour à partir des informations de mise à jour du premier.

La description suivante, faite en regard des dessins ci-annexés, le tout donné à titre d'exemples non limitatifs fera bien comprendre comment l'invention peut être réalisée.

Sur les dessins :
La figure 1 montre un appareil conforme à l'invention,
La figure 2 montre le schéma de l'appareil de la figure 1,
La figure 3 montre un organigramme explicitant le fonctionnement de l'appareil qui reçoit la mise à jour,
La figure 4 montre un organigramme explicitant le fonctionnement de l'appareil qui fournit les données de mise à jour.

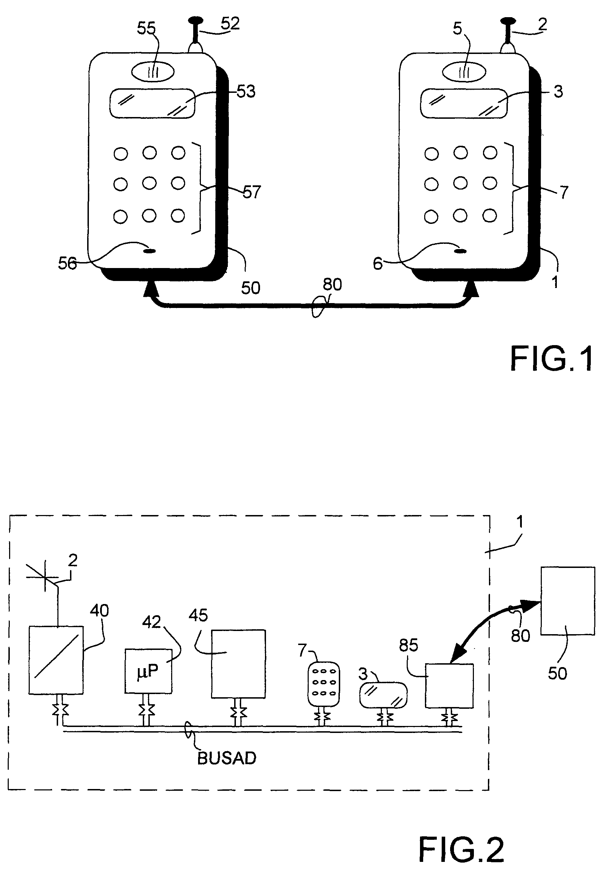

La figure 1 montre un appareil conforme à l'invention qui porte la référence 1. Cet appareil est un appareil de radiotéléphonie mobile destiné à se raccorder à un réseau cellulaire. Il comporte une antenne 2, un écran 3, un écouteur 5, un microphone 6 et un clavier 7.

La figure 2 montre un schéma électrique de cet appareil. La référence 40 désigne la partie émission réception radioélectrique. L'ensemble à microprocesseur qui gère le fonctionnement de l'appareil porte la référence 42. Cet ensemble 42 coopère avec un dispositif de stockage 45 constitué, par exemple, par une mémoire de type flash qui contient des éléments déterminant ce fonctionnement et qui sont susceptibles d'être mis à jour. D'autres éléments, non susceptibles d'être mis à jour, sont contenus soit dans cette mémoire soit dans une autre mémoire non montrée sur cette figure. Une ligne commune BUSAD relie les différents organes de cet appareil. Cette mémoire peut nécessiter des mises à jour afin de modifier, de supprimer ou d'ajouter de nouvelles fonctionnalités à l'appareil.

Conformément à l'invention, il est prévu des moyens de mise à jour de ce dispositif de stockage 45 opérant à partir d'un autre appareil 50 de même type.

Cet appareil 50 (figure 1) comporte les même éléments que l'appareil 1, à savoir une antenne 52, un écran 53, un écouteur 55, un microphone 56 et un clavier 57.

Afin de faire cette mise à jour, les appareils 1 et 50 sont reliés par un câble 80. Ce câble est connecté à l'appareil au moyen d'un circuit d'interface 85 contenu dans l'appareil 1. Il va de soi qu'un circuit d'interface semblable ou similaire se trouve dans l'appareil 50.

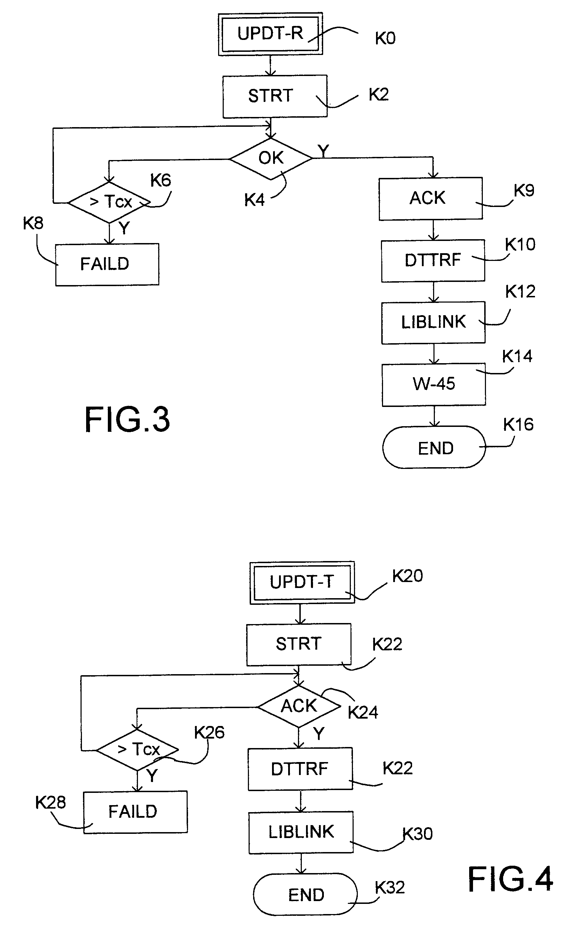

La figure 3 montre le fonctionnement de l'appareil qui demande une mise à jour. Un préalable à cette mise à jour est que la liaison soit déjà mise en place. Le départ de ce processus démarre à la case K0. L'utilisateur, pour effectuer cette mise à jour valide une rubrique d'un menu prévue à cet effet et visualisée sur l'écran 3. La case K2 indique le démarrage du processus de vérification de la connexion 80. On teste alors cette connexion, case K4. Pour ce test, on peut détecter une séquence préambule émise avant les données de mise à jour. Si cette séquence n'est pas détectée, on va à la case K6. Cette case indique si le temps imparti pour établir la connexion est écoulé ou non. Si le temps est écoulé, alors on déclare, par un message sur l'écran 3 que la connexion n'est pas établie et l'on demande à l'utilisateur de vérifier cette liaison (case K8). Si on est encore dans le temps imparti, on retourne au test de la case K4. Lorsque la liaison ou la connexion est déclarée établie, on envoie (case K9), un message d'accusé réception à l'appareil qui fournit les informations de mise à jour. Alors le transfert des données peut ensuite s'effectuer, case K10. A la fin de ce transfert, la liaison est libérée case K12. On entreprend ensuite (case K14) l'écriture de la mémoire 45 qui contient des données à mettre à jour. Le processus est alors terminé, case K16.

La figure 4 montre le fonctionnement de l'appareil à partir duquel les informations de mise à jour sont prélevées. Le processus démarre lui aussi (case K20), par la validation d'une rubrique d'un menu. La case K22 qui suit indique l'émission de la séquence préambule déjà mentionnée. On teste, à la case K24 si on a reçu le message d'accusé réception. Si non on teste ( case K26 ) la durée pendant laquelle ce message n'a pas encore été reçu. Si ce temps est jugé trop long on déclare la connexion impossible (case K28). Si l'accusé réception est reçu alors l'émission des données de mise à jour peut s'effectuer (case K22). Ceci fait la liaison est libérée, case K30. Le processus est déclaré terminé, case K32.

La liaison ou la connexion dont il a été question peut être réalisée de différentes façons, par exemple par un fil en cuivre, par une liaison infra rouge ou par un système connu sous le nom de " Blue Tooth ".

## Revendications

1. Appareil d'un certain type comprenant un dispositif de stockage pour des informations de fonctionnement, **caractérisé en ce qu'**il comporte des moyens de mise à jour pour mettre à jour son dispositif de stockage à partir d'un autre appareil de même type.

2. Appareil selon la revendication 1? **caractérisé en ce que** lesdits moyens de mise à jour sont constitués à partir d'une liaison série par fil.

3. Appareil selon la revendication 1, **caractérisé en ce que** lesdits moyens de mise à jour sont constitués à partir d'une liaison par infra rouge.

4. Appareil selon la revendication 1, **caractérisé en ce que** lesdits moyens de mise à jour sont constitués à partir d'une liaison radio du genre " Blue Tooth ".

5. Procédé pour mettre à jour, au moyen d'informations de mise à jour, le logiciel de fonctionnement d'un appareil selon l'une des revendications 1 à 4, **caractérisé en ce que** lesdites informations de mise à jour sont prélevées à partir d'un autre appareil de même type.

6. Procédé selon la revendication 5, **caractérisé en ce que** la mise à jour s'effectue selon les étapes suivantes :
- préparation d'un premier appareil pour fournir les informations de mise à jour,
- préparation d'un deuxième appareil pour recevoir la mise à jour,
- transfert des informations du premier appareil vers le deuxième,
- inscription des données de mise à jour dans le dispositif de stockage du deuxième appareil.

7. Système comprenant au moins deux appareils de même type selon l'une des revendications 1 à 4 comprenant des moyens pour échanger des informations de mise à jour, **caractérisé en ce qu'**au moins un premier appareil comporte des moyens pour communiquer ses informations de mise à jour et **en ce qu'**au moins un deuxième appareil comporte des moyens pour être mis à jour à partir des informations de mise à jour du premier.
